# EUROPEAN PATENT SPECIFICATION

(11) **EP 3 426 020 B1**
(45) Date of publication and mention of the grant of the patent: **18.11.2020**
(21) Application number: 17712260.3
(22) Date of filing: 08.03.2017
(51) Int. Cl.: A01J 7/02, A01J 5/007, A01J 5/017, A01J 7/04

(54) **CONTROL SYSTEM FOR AN AUTOMATIC MILKING INSTALLATION AND METHOD OF CONTROLLING AN AUTOMATIC MILKING INSTALLATION**
STEUERUNGSSYSTEM FÜR EINE AUTOMATISCHE MELKANLAGE UND VERFAHREN ZUR STEUERUNG EINER AUTOMATISCHEN MELKANLAGE
SYSTÈME ET PROCÉDÉ DE CONTRÔLE D'INSTALLATION DE TRAITE AUTOMATIQUE

(30) Priority: 11.03.2016 SE 1650333
(43) Date of publication of application: 16.01.2019
(73) Proprietor: DeLaval Holding AB, 147 21 Tumba (SE)
(72) Inventor: HALLSTRÖM, Anders, 147 21 Tumba (SE)
(74) Representative: Lilliehorn, Tobias
(86) International application number: PCT/SE2017/050222
(87) International publication number: WO 2017/155457

(56) References cited:
- WO-A1-2010/031632
- WO-A1-2012/123944
- WO-A1-2014/165472
- US-A1- 2009 278 950
- US-A1- 2016 004 144

## Description

### THE BACKGROUND OF THE INVENTION AND PRIOR ART

The present invention relates generally to solutions for controlling automatic milking installations. The invention relates to a system according to the preamble of claim 1 and a corresponding method. In modern milk production, an increasing number of functions rely on image data registered via one or more cameras of a vision system. Although this is generally an efficient and reliable approach, the image registration is also associated with problems. Namely, the farm environment is relatively dirty, and over time the cameras' optical systems risk being obstructed by dirt particles. Of course, this degrades the performance, and if left unattended, a dirty lens will result in that an intended function relying on image data cannot be effected.

WO 2010/031632 shows a solution for testing a camera arranged in an automated milking system. In particular, a camera test arrangement is provided for determining the performance of a camera arranged for use in an automated milking system. The camera test arrangement includes a camera test device with means for providing a repeatable test environment for the camera. The camera test arrangement further includes image processing means for processing data obtained from the camera when arranged in the camera test device and for determining the performance of the camera. The invention provides reliable yet non- expensive means for ensuring proper functioning of the camera.

WO 2012/123944 A1 discloses a system and method for controlling an automatic milking installation according to the preamble of independent claims 1 and 10.

### PROBLEMS ASSOCIATED WITH THE PRIOR ART

Hence, a solution is known for detecting if the vision system of a milking installation needs cleaning. However, it is still a challenge to ensure that the operator remembers to actually perform the cleaning. Further, since many of the functions in a milking installation relying on image data do not forward any image data to the operator, there is no natural means for the operator to notice, or recall, that the vision system needs cleaning if, for some reason, this has been neglected.

### SUMMARY OF THE INVENTION

The object of the present invention is therefore to offer an improved solution for prompting the operator of a milking installation to keep the vision system sufficiently clean to ensure the functionality of the system.

A first aspect of the invention discloses a system for controlling an automatic milking installation according to independent claim 1.

This system is advantageous because it renders it impossible for the operator to interact with the system without being reminded to clean the cover surface of the imaging unit should this be necessary.

According to one embodiment of this aspect of the invention, the at least one graphical element is configured to express the amount of dirt on the transparent cover surface proportionally, such that a relatively small amount of dirt is expressed as one or more graphical elements of comparatively small size, number and/or high transparency, and a relatively large amount of dirt is expressed as one or more graphical elements of comparatively large size, number and/or low transparency. Thereby, the user is informed about the gravity of the contamination in an intuitive and comprehensible manner.

According to another embodiment of this aspect of the invention, if the control unit determines that the amount of dirt on the transparent cover surface is below a first threshold level, the graphics data reflect that the transparent cover surface is clean. Namely, inevitably there will always be some dirt on the transparent cover surface. However, as long as this does not influence the quality of the image data, there is no need to inform the user about the dirt. According to yet another embodiment of this aspect of the invention, if the control unit determines that the amount of dirt on the transparent cover surface is above a second threshold level, the graphics data reflect that the transparent cover surface is highly obstructed with dirt by the control unit being configured to cause the at least one graphical element to be presented in a cyclic manner alternating between first and second phases. Here, in the first phase, the at least one graphical element blocks a relatively large proportion of information in at least one of the at least one display view; and in the second phase, the at least one graphical element blocks a relatively small proportion of the information in said at least one display view. Consequently, it becomes evident to the user that the transparent cover surface is heavily soiled; and still, it is possible to interact via the user interface.

The at least one graphical element may be presented alternatingly either in the first or second phase. However, preferably, the control unit is configured to generate the graphics data such that the at least one graphical element gradually transitions between the first and second phases, either in a stepwise manner or continuously.

According to the invention, the control unit is configured to generate the graphics data such that the at least one graphical element is superimposed on at least one first display view of the at least one display view. As a result, information in the at least one first display view is at least partially blocked from being visually inspected by the user. Hence, the impression of a dirty transparent cover surface is conveyed to the user in a highly intuitive manner. Preferably, to further enhance this impression, the at least one graphical element is arranged to mimic a number of dirt particles.

According to another embodiment of this aspect of the invention, the control unit is configured to repeatedly update the determining of the parameter indicating the amount of dirt on the transparent cover surface; and repeatedly generate updatings of the at least one graphical element based on the updated determining of the parameter indicating the amount of dirt on the transparent cover surface. In other words, if the degree of dirtiness increases, the at least one graphical element reflect this, e.g. by increasing in size and/or number and/or with decreasing transparency. Conversely, if the amount of dirt on the transparent cover surface is determined to be below the first threshold level (i.e. the typical result of manual cleaning), the graphics data reflecting that the transparent cover surface is clean, e.g. by not presenting any graphical elements. This is advantageous because the user is provided with immediate feedback on the quality of any cleaning performed.

According to yet another embodiment of this aspect of the invention, if the system comprises two or more imaging units, the control unit is configured to generate the graphics data such that the at least one graphical element is presented in the graphical user interface in a manner associating the determined amount of dirt to a specific imaging unit of said imaging units on whose transparent cover surface has been determined. For example, if an imaging unit employed at a particular milking point has a dirty transparent cover surface, the at least one graphical element is presented in a graphical user interface associated with that milking point. Naturally, this facilitates identification of the imaging unit in need of cleaning.

According to one embodiment of this aspect of the invention, the system includes a user-manipulable input member configured to receive a user command, which, when received by the control unit, temporarily prevents the at least one graphical element from being presented via the graphical user interface. Thus, for example as long as the user holds down a button, a key or activates an on-screen button on a touchscreen, he/she can obtain an unobstructed view of any payload data shown via the graphical user interface even if the transparent cover surface has been determined to be relatively dirty.

A second aspect of the invention discloses a method of controlling an automatic milking installation according to independent claim 10. The advantages of this method, as well as the preferred embodiments thereof, are apparent from the discussion above with reference to the proposed system.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: illustrates how an imaging unit records image data containing data representing a portion of an animal;
- Figure 2: shows a user interacting with a graphical user interface of the proposed system;
- Figures 3-7: illustrate the graphical user interface according to embodiments of the invention; and
- Figure 8: illustrates, by means of a flow diagram, the general method according to the invention.

### DESCRIPTION OF PREFERRED EMBODIMENTS OF THE INVENTION

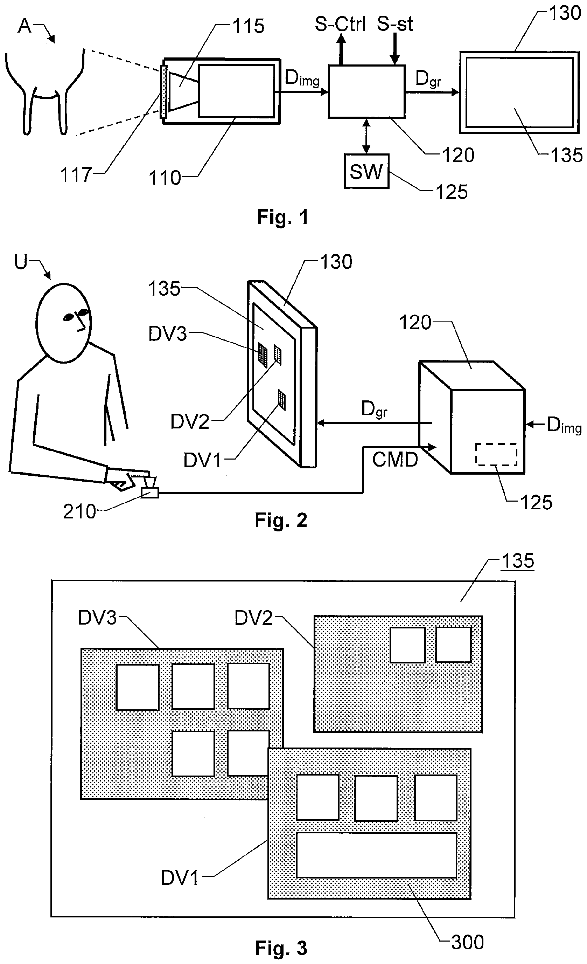

Figure 1 illustrates how an imaging unit 110 records image data D_{img} containing data representing a portion of an animal A. Naturally, the recorded image data D_{img} inevitably contain a relatively large amount of data in addition to said data representing the portion of the animal A. For example, the recorded image data D_{img} also include data reflecting the presence of any dirt particles located within a view field of the imaging unit 110.

Figure 2 shows a user U interacting with a graphical user interface 135 of the proposed system for controlling an automatic milking installation.

The graphical user interface 135 is preferably implemented by a display unit 130. The graphical user interface 135 is configured to enable the user U to interact with the automatic milking installation via at least one display view DV1, DV2 and/or DV3. In addition to the graphical user interface 135, the system includes an imaging unit 110 and a control unit 120.

The imaging unit 110 is configured to record image data Dimg containing data representing at least one portion of a dairy animal A, say the animal's A udder and its teats. The imaging unit 110 has a transparent cover surface 117 configured to protect an optics section 115 of the imaging unit 110. The transparent cover surface 117 is transparent with respect to a range of wavelengths within which the imaging unit 110 is operative to record the image data D_{img}. For example, if the imaging unit 110 is configured to record the image data D_{img} from a first wavelength (say in the infrared part of the light spectrum) to a second wavelength (say in in the ultraviolet part of the light spectrum), the transparent cover surface 117 is transparent at least with respect to a spectrum of electromagnetic energy ranging between the first and second wavelengths.

The control unit 120 is configured to receive the recorded image data D_{img}, and based thereon, produce at least one control signal S-Ctrl arranged to control at least one function of the automatic milking installation. Further, the control unit 120 is configured to process the recorded image data D_{img} to determine a parameter indicating an amount of dirt on the transparent cover surface 117. For example, the technique described in WO 2010/031632 (hereby incorporated by reference) can be used to determine the parameter in question. Additionally, the control unit 120 is configured to generate graphics data D_{gr} for presentation to the user U via the graphical user interface 135, which graphics data D_{gr} contain at least one graphical element reflecting the amount of dirt on the transparent cover surface 117.

Figures 3-7 illustrate the graphical user interface 135 according to embodiments of the invention.

Specifically, Figure 3 shows one example of how the graphical user interface 135 can be implemented to show display views DV1, DV2 and DV3 respectively, each of which represents a particular function of the automatic milking installation. Figure 3 illustrates a situation where no dirt has been determined to be located on the transparent cover surface 117, or at least an amount of dirt below or equal to a first threshold level has been determined. Namely, in such a case the graphics data D_{gr} reflect that the transparent cover surface 117 is clean, e.g. by leaving a display window DV1 associated with an imaging unit 110 completely unaffected 300. In other words, the display window DV1 shows no signs of the transparent cover surface 117 being dirty.

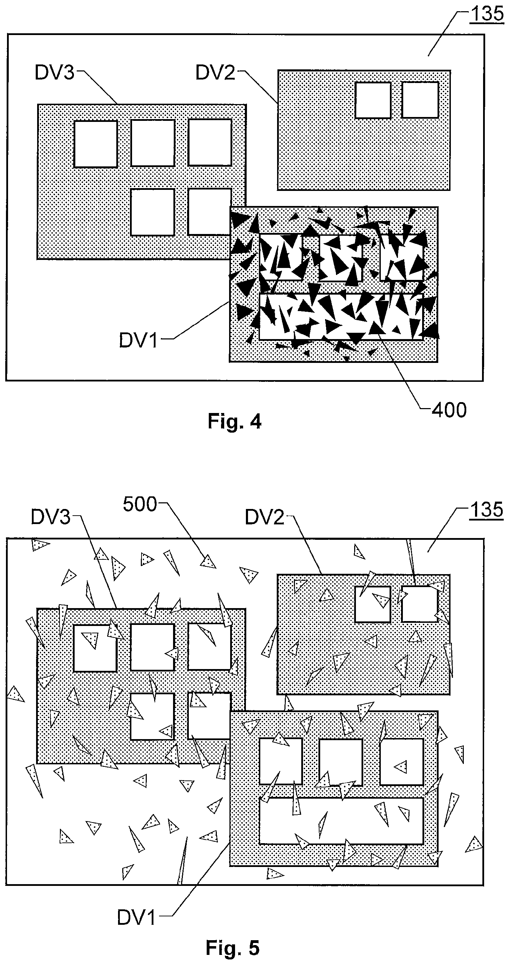

According to one embodiment of the invention, if an amount of dirt above the first threshold level has been determined on the transparent cover surface 117, the control unit 120 is configured to generate the graphics data D_{gr} such that the graphics data D_{gr} reflect that the transparent cover surface 117 is dirty. Preferably, at least one graphical element in the graphics data D_{gr} is configured to express the amount of dirt on the transparent cover surface 117 proportionally. This means that a relatively small amount of dirt can be expressed as one or more graphical elements of comparatively small size, number, and/or high transparency, and a relatively large amount of dirt is expressed as one or more graphical elements of comparatively large size, number and/or low transparency. Figure 4 shows an example where a comparatively large number of graphical elements 400 are included in the graphics data D_{gr} in a display window DV1 to reflect the fact that the transparent cover surface 117 is relatively dirty.

Preferably, if the automatic milking system includes two or more imaging units 110, the control unit 120 is configured to generate the graphics data D_{gr}, such that the graphical elements are presented in the graphical user interface 135 in a manner associating the determined amount of dirt to a specific imaging unit 110 of said imaging units 110 on whose transparent cover surface 117 has been determined. For example, the graphical elements 400 presented in display view DV1 of the graphical user interface 135 may indicate that the transparent cover surface 117 of a first imaging unit has a medium degree of contamination, whereas the fact that display views DV2 and DV3 do not include any obstructing graphical elements at all may indicate that any associated imaging units have clean transparent cover surface 117, or at least that the degree of contamination is below the first threshold level.

Figure 5 shows an example where somewhat less graphical elements 500 are included in the graphics data D_{gr} to reflect the fact that the transparent cover surface 117 is somewhat less dirty. Here, the graphical elements 500 are spread out over the entire graphical user interface 135, inter alia covering display views DV1, DV2 and DV3.

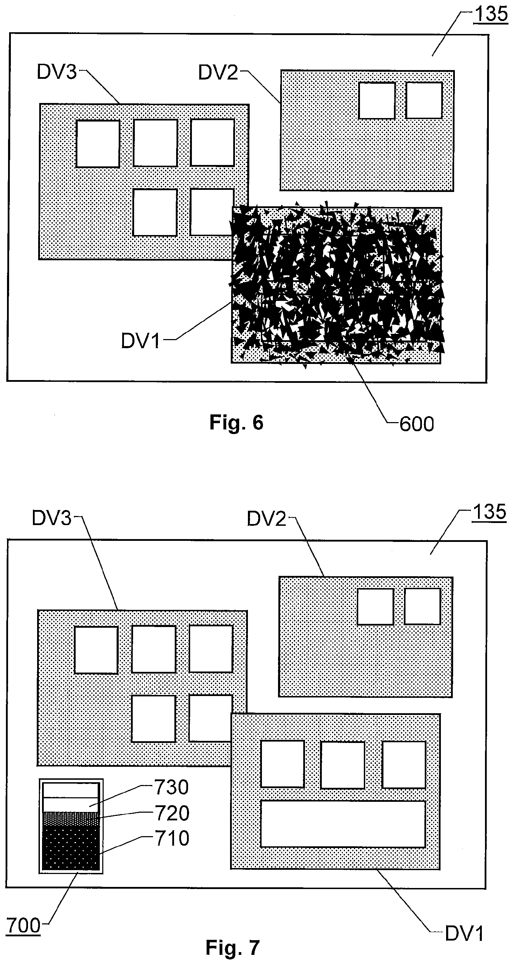

In Figure 6, we see another example, where a very large number of graphical elements 600 are included in the graphics data D_{gr} in the display view DV1 to reflect the fact that the transparent cover surface 117 is highly obstructed with dirt. Such a high density of graphical elements 600 may render it impossible for a user to extract any information from the display view DV1.

Therefore, according to one embodiment of the invention, if the control unit 120 determines that the amount of dirt on the transparent cover surface 117 is above a second threshold level, the control unit 120 is configured to cause graphical elements 600 to be presented in a cyclic manner alternating between first and second phases. In the first phase the graphical elements 600 block a relatively large proportion of information in at least one display view, say DV1; and in the second phase, the graphical elements block a relatively small proportion of the information in the display view DV1, for example as 400 in Figure 4. Thereby, the graphics data D_{gr} can reflect that the transparent cover surface 117 is highly obstructed with dirt, and at the same time, the user U can extract information from the display view DV1 in question.

The control unit 120 may be configured to generate the graphics data D_{gr} such that the at least one graphical element is presented in either the first or the second phase in an alternating manner. Preferably, however, the control unit 120 is configured to generate the graphics data D_{gr} such that the at least one graphical element gradually transitions between the first and second phases, either stepwise, or in a continuous manner.

Especially if the transparent cover surface 117 is highly obstructed with dirt, it may be difficult for the user U to extract information via the graphical user interface 135. Preferably, therefore, the system may include a user-manipulable input member 210 for inhibiting presentation of the at least one graphical element. More precisely, the user-manipulable input member 210 is configured to forward a user command CMD (e.g. generated in response to activation of an on-screen button, a physical button or key on a keyboard) to the control unit 120. In response to the user command CMD, in turn, the control unit 120 is configured to temporarily prevent the at least one graphical element 400, 500 or 600 from being presented via the graphical user interface 135. Consequently, for example while the user U keeps an on-screen button activated, no graphical elements are shown via the graphical user interface 135.

To enhance the user's U intuitive understanding of the degree of contamination on the transparent cover surface 117, the control unit 120 is configured to generate the graphics data D_{gr}, such that the at least one graphical element is superimposed on at least one, e.g. DV1, and the information therein is thereby at least partially blocked from being visually inspected by the user U. The at least one graphical element may either be completely opaque, or more or less transparent depending on the degree of visual obstruction desired.

Further preferably, the graphical elements 400, 500 and 600 respectively are arranged to mimic a number of dirt particles. This number is typically not equal to the number of dirt particles on the transparent cover surface 117, however it is proportional thereto as discussed above.

Figure 7 illustrates an alternative way of indicating the amount of dirt on the transparent cover surface 117 via the graphics data D_{gr}. Here, the graphical user interface 135 includes an indicator bar 700, which designates how dirty the control unit 120 has determined the transparent cover surface 117 to be. For example, a first field 710 of the indicator bar 700 may correspond to a relatively low degree of contamination, a second field 720 of the indicator bar 700 may correspond to medium degree of contamination, and a third field 730 of the indicator bar 700 may correspond to a relatively high degree of contamination. Moreover, an intensity of the field may express more detailed information about the degree of contamination. For instance, in Figure 7, the fact that the second field 720 has a somewhat lower intensity than the first field 710 is preferably interpreted to indicate that transparent cover surface 117 has not yet reached the medium degree of contamination.

According to one embodiment of the invention, if the control unit 120 determines that the amount of dirt on the transparent cover surface 117 is below the first threshold level, the control unit 120 is configured to generate the graphics data D_{gr} to reflect that the transparent cover surface 117 is clean, for example as in Figure 3, i.e. where no obstructing graphical elements are included in the graphics data D_{gr}. This is beneficial, since it provides the user U with feedback as to whether or not a cleaning of the transparent cover surface 117 has been successful.

Since the contamination of the transparent cover surface 117 varies over time, or more precisely gradually increases during use of the milking installation, and is then reduced substantially in connection with cleaning, the control unit 120 is preferably configured to repeatedly update the determining of the parameter indicating the amount of dirt on the transparent cover surface 117.

Further, based on the updated determining of the parameter indicating the amount of dirt on the transparent cover surface 117, the control unit 120 is configured to repeatedly generate updatings of the graphical elements 400, 500, 600 and 700 in the graphics data D_{gr}. Thus, if the amount of dirt on the transparent cover surface 117 is determined to be below the first threshold level, the control unit 120 is configured to generate the graphics data D_{gr} such that the graphics data D_{gr} reflect that the transparent cover surface 117 is clean.

It is generally advantageous if the control unit 120 is configured to effect the above-mentioned procedure in a fully automatic manner, for instance by an executing computer program. Therefore, the control unit 120 may be communicatively connected to a memory unit 125 storing a computer program product, which, in turn, contains software for making at least one processor in the control unit 120 execute the above-described actions when the computer program product is run on the control unit 120.

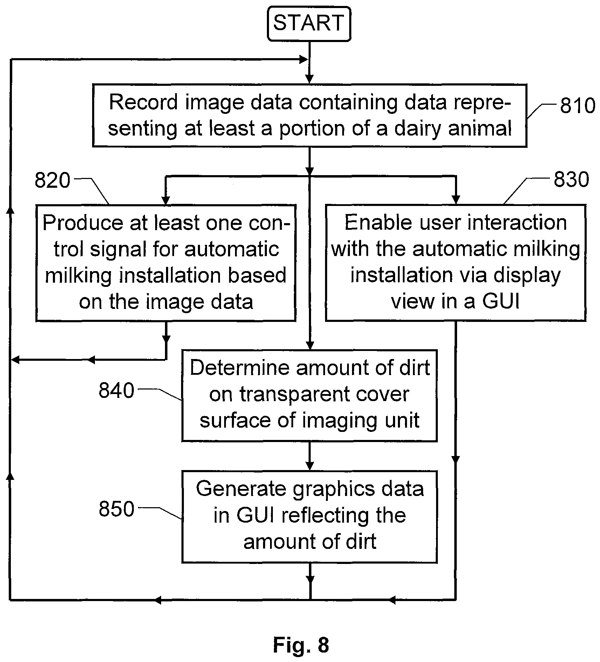

In order to sum up, and with reference to the flow diagram in Figure 8, we will now describe the general method according to the invention for controlling an automatic milking installation.

In a first step 810, image data are recorded by means of an imaging unit. The recorded image data contain data that represent at least one portion of a dairy animal. It is further presumed that the imaging unit has a transparent cover surface that is configured to protect an optics section of the imaging unit, and through which transparent cover surface the image data are recorded.

Then, in a step 820, at least one control signal is produced based on the recorded image data. The at least one control signal is arranged to control at least one function of the automatic milking installation, for example attaching and detaching teatcups.

In a step 830, subsequent to step 810 and preferably parallel with step 820, a user is enabled to interact with the automatic milking installation via at least one display view in a graphical user interface.

After steps 820 and 830 the procedure loops back to step 810 for updated recording of the image data. However, after step 810 and preferably parallel with steps 820 and 830, in a step 840 the recorded image data are processed to determine a parameter indieating an amount of dirt on the transparent cover surface.

Thereafter, in a step 850, graphics data are generated for presentation to the user via the graphical user interface. The graphics data contain at least one graphical element reflecting the amount of dirt on the transparent cover surface, thus informing the user of any dirt on the transparent cover surface protecting the optics section of the imaging unit. Then, the procedure loops back to step 810.

All of the process steps, as well as any sub-sequence of steps, described with reference to Figure 8 above may be controlled by means of a programmed processor. The embodiments of the invention described above with reference to the drawings comprise processor and processes performed in at least one processor, as well as computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

Although the invention is advantageous in connection with cow milking, the invention is equally well adapted for implementation in milking machines for any other kind of mammals, such as goats, sheep or buffaloes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. A system for controlling an automatic milking installation, comprising:
a graphical user interface (135) configured to enable a user (U) to interact with the automatic milking installation via at least one display view (DV1, DV2, DV3);
an imaging unit (110) configured to record image data (D_{img}) comprising data representing at least one portion of a dairy animal (A), the imaging unit (110) having a transparent cover surface (117) configured to protect an optics section (115) of the imaging unit (110) and through which transparent cover surface (117) the image data (D_{img}) are recorded; and
a control unit (120) configured to receive the recorded image data (D_{img}), and based thereon, produce at least one control signal (S-Ctrl) arranged to control at least one function of the automatic milking installation, **characterized in that** the control unit (120) is further configured to:
process the recorded image data (D_{img}) to determine a parameter indicating an amount of dirt on the transparent cover surface (117), and
generate graphics data (D_{gr}) for presentation to the user (U) via the graphical user interface (135), which graphics data (D_{gr}) contain at least one graphical element (400, 500, 600, 700) reflecting the amount of dirt on the transparent cover surface (117), wherein
the control unit (120) is configured to generate the graphics data (Dgr) such that the at least one graphical element is superimposed on at least one first display view (DV1) of the at least one display view (DV1, DV2, DV3) and information in the at least one first display view (DV1) is thereby at least partially blocked from being visually inspected by the user (U).

2. The system according to claim 1, wherein the at least one graphical element is configured to express the amount of dirt on the transparent cover surface (117) proportionally, such that a relatively small amount of dirt is expressed as one or more graphical elements (500, 710) of comparatively small size number and/or high transparency, and a relatively large amount of dirt is expressed as one or more graphical elements (400, 600, 720) of comparatively large size, number and/or low transparency.

3. The system according to any one of claims 1 or 2, wherein if the control unit (120) determines that the amount of dirt on the transparent cover surface (117) is below a first threshold level, the graphics data (D_{gr}) reflect (300) that the transparent cover surface (117) is clean.

4. The system according to any one of the preceding claims, wherein if the control unit (120) determines that the amount of dirt on the transparent cover surface (117) is above a second threshold level, the graphics data (D_{gr}) reflect that the transparent cover surface (117) is highly obstructed with dirt by the control unit (120) being configured to cause the at least one graphical element to be presented in a cyclic manner alternating between first and second phases, such that in the first phase the at least one graphical element (600) block a relatively large proportion of information in at least one of the at least one display view (DV1), and in the second phase the at least one graphical element (400) block a relatively small proportion of the information in said at least one display view (DV1).

5. The system according to claim 4, wherein the control unit (120) is configured to generate the graphics data (D_{gr}) such that the at least one graphical element gradually transitions between the first and second phases.

6. The system according to any one of the preceding claims, wherein the at least one graphical element (400, 500, 600) is arranged to mimic a number of dirt particles.

7. The system according to any one of claims 3 to 6, wherein the control unit (120) is configured to:
repeatedly update the determining of the parameter indicating the amount of dirt on the transparent cover surface (117), and
repeatedly generate updatings of the at least one graphical element (400, 500, 600, 700) based on the updated determining of the parameter indicating the amount of dirt on the transparent cover surface (117); and if the amount of dirt on the transparent cover surface (117) is determined to be below the first threshold level, the graphics data (D_{gr}) reflecting (300) that the transparent cover surface (117) is clean.

8. The system according to any one of the preceding claims, wherein, if the system comprises two or more imaging units (110), the control unit (120) is configured to generate the graphics data (D_{gr}) such that the at least one graphical element (400) is presented in the graphical user interface (135) in a manner associating the determined amount of dirt to a specific imaging unit (110) of said imaging units (110) on whose transparent cover surface (117) has been determined.

9. The system according to any one of the preceding claims, further comprising a user-manipulable input member (210) configured to forward a user command (CMD) to the control unit (120), which user command (CMD) when received by the control unit (120) is configured to cause the control unit (120), to temporarily prevent the at least one graphical element (400, 500, 600) from being presented via the graphical user interface (135).

10. A method of controlling an automatic milking installation, the method comprising:
enabling, via at least one display view (DV1, DV2, DV3) in a graphical user interface (135), a user (U) to interact with the automatic milking installation;
recording image data (D_{img}), by means of an imaging unit (110), the recorded image data (D_{img}) comprising data representing at least one portion of a dairy animal (A), and the imaging unit (110) having a transparent cover surface (117) configured to protect an optics section (115) of the imaging unit (110) and through which transparent cover surface (117) the image data (D_{img}) are recorded; and
producing at least one control signal (S-Ctrl) based on the recorded image data (D_{img}), the at least one control signal (S-Ctrl) being arranged to control at least one function of the automatic milking installation, **characterized by:**
processing the recorded image data (D_{img}) to determine a parameter indicating an amount of dirt on the transparent cover surface (117),
generating graphics data (D_{gr}) for presentation to the user (U) via the graphical user interface (135), which graphics data (D_{gr}) contains at least one graphical element (400, 500, 600, 700) reflecting the amount of dirt on the transparent cover surface (117), and
generating the graphics data (Dgr) such that the at least one graphical element is superimposed on at least one first display view (DV1) of the at least one display view (DV1, DV2, DV3) and information in the at least one first display view (DV1) is thereby at least partially blocked from being visually inspected by the user (U).

11. The method according to claim 10, wherein the at least one graphical element is configured to express the amount of dirt on the transparent cover surface (117) proportionally, such that a relatively small amount of dirt is expressed as one or more graphical elements (500, 710) of comparatively small size, number and/or high transparency, and a relatively large amount of dirt is expressed as one or more graphical elements (400, 600, 720) of comparatively large size, number and/or low transparency.

12. The method according to any one of claims 10 or 11, wherein if it is determined that the amount of dirt on the transparent cover surface (117) is below a first threshold level, the method comprises generating the graphics data (D_{gr}) to reflect (300) that the transparent cover surface (117) is clean.

13. The method according to any one of claims 10 to 12, wherein if it is determined that the amount of dirt on the transparent cover surface (117) is above a second threshold level, the method comprises generating the graphics data (D_{gr}) to reflect (600) that the transparent cover surface (117) is highly obstructed with dirt by presenting the at least one graphical element in a cyclic manner alternating between first and second phases, such that in the first phase the at least one graphical element (600) block a relatively large proportion of information in at least one of the at least one display view (DV1), and in the second phase the at least one graphical element (400) block a relatively small proportion of the information in said at least one display view (DV1).

14. The method according to any one of claims 10 to 13, wherein the at least one graphical element (400, 500, 600) is arranged to mimic a number of dirt particles.

15. The method according to any one of claims 12 to 14, comprising:
updating, repeatedly, the determining of the parameter indicating the amount of dirt on the transparent cover surface (117), and
generating repeated updatings of the at least one graphical element (400, 500, 600, 700) based on the updated determining of the parameter indicating the amount of dirt on the transparent cover surface (117); and if the amount of dirt on the transparent cover surface (117) is determined to be below the first threshold level, the graphics data (D_{gr}) reflecting (300) that the transparent cover surface (117) is clean.

16. The method according to any one of claims 10 to 15, wherein, if the system comprises two or more imaging units (110), the method comprises generating the graphics data (D_{gr}) such that the at least one graphical element (400) is presented in the graphical user interface (135) in a manner associating the determined amount of dirt to a specific imaging unit (110) of said imaging units (110) on whose transparent cover surface (117) has been determined.

17. The method according to any one of the claims 10 to 16, further comprising:
checking if a user command (CMD) has been received via a user-manipulable input member (210), and if so
temporarily preventing the at least one graphical element (400, 500, 600) from being presented via the graphical user interface (135).

## Patentansprüche

1. System zum Steuern einer automatischen Melkanlage, das Folgendes umfasst:
eine grafische Benutzeroberfläche (135), die konfiguriert ist, um es einem Benutzer (U) zu ermöglichen, über wenigstens eine Anzeigeansicht (DV1, DV2, DV3) mit der automatischen Melkanlage zu interagieren;
eine Abbildungseinheit (110), die konfiguriert ist, um Abbildungsdaten (D_{img}) aufzuzeichnen, die Daten umfassen, die wenigstens einen Abschnitt eines milchgebenden Tiers (A) darstellen, wobei die Abbildungseinheit (110) eine transparente Abdeckfläche (117) aufweist, die konfiguriert ist, um einen Optikbereich (115) der Abbildungseinheit (110) zu schützen, und durch deren transparente Abdeckfläche (117) die Abbildungsdaten (D_{img}) aufgezeichnet werden; und
eine Steuereinheit (120), die konfiguriert ist, um die aufgezeichneten Abbildungsdaten (D_{img}) zu empfangen, und darauf basierend wenigstens ein Steuersignal (S-Ctrl) herzustellen, das angeordnet ist, um wenigstens eine Funktion der automatischen Melkanlage zu steuern, **dadurch gekennzeichnet, dass** die Steuereinheit (120) ferner für Folgendes konfiguriert ist:
Verarbeiten der aufgezeichneten Abbildungsdaten (D_{img}), um einen Parameter zu bestimmen, der eine Schmutzmenge auf der transparenten Abdeckfläche (117) angibt, und Erzeugen von Grafikdaten (D_{gr}) für eine Präsentation für den Benutzer (U) über die grafische Benutzeroberfläche (135), wobei die Grafikdaten (D_{gr}) wenigstens ein grafisches Element (400, 500, 600, 700) enthalten, das die Schmutzmenge auf der transparenten Abdeckfläche (117) widerspiegelt, wobei
die Steuereinheit (120) konfiguriert ist, um die Grafikdaten (Dgr) derart zu erzeugen, dass das wenigstens eine grafische Element auf wenigstens einer ersten Anzeigeansicht (DV1) der wenigstens einen Anzeigeansicht (DV1, DV2, DV3) überlagert ist und Informationen in der wenigstens einen ersten Anzeigeansicht (DV1) dadurch wenigstens teilweise blockiert werden, um durch den Benutzer (U) visuell überprüft zu werden.

2. System nach Anspruch 1, wobei das wenigstens eine grafische Element konfiguriert ist, um die Schmutzmenge auf der transparenten Abdeckfläche (117) derart proportional auszudrücken, dass eine relativ kleine Schmutzmenge als ein oder mehrere grafische Elemente (500, 710) mit vergleichsweise kleiner Größe, Anzahl und/oder hoher Transparenz ausgedrückt wird, und eine relativ große Schmutzmenge als ein oder mehrere grafische Elemente (400, 600, 720) mit vergleichsweise großer Größe, Anzahl und/oder geringer Transparenz ausgedrückt wird.

3. System nach einem der Ansprüche 1 oder 2, wobei, falls die Steuereinheit (120) bestimmt, dass die Schmutzmenge auf der transparenten Abdeckfläche (117) unter einem ersten Schwellenwert liegt, die Grafikdaten (D_{gr}) widerspiegeln (300), dass die transparente Abdeckfläche (117) sauber ist.

4. System nach einem der vorhergehenden Ansprüche, wobei, falls die Steuereinheit (120) bestimmt, dass die Schmutzmenge auf der transparenten Abdeckfläche (117) über einem zweiten Schwellenwert liegt, die Grafikdaten (D_{gr}) widerspiegeln, dass die transparente Abdeckfläche (117) durch die Steuereinheit (120) stark mit Schmutz gehindert ist, wobei diese konfiguriert ist, um zu bewirken, dass das wenigstens eine grafische Element auf eine zyklisch abwechselnde Weise zwischen der ersten und der zweiten Phase derart dargestellt wird, dass in der ersten Phase das wenigstens eine grafische Element (600) einen relativ großen Informationsanteil in wenigstens einer der wenigstens einen Anzeigeansichten (DV1) blockiert, und in der zweiten Phase das wenigstens eine grafische Element (400) einen relativ kleinen Informationsanteil in der wenigstens einen Anzeigeansicht (DV1) blockiert.

5. System nach Anspruch 4, wobei die Steuereinheit (120) konfiguriert ist, um die Grafikdaten (D_{gr}) derart zu erzeugen, dass das wenigstens eine grafische Element nach und nach zwischen der ersten und der zweiten Phase übergeht.

6. System nach einem der vorhergehenden Ansprüche, wobei das wenigstens eine grafische Element (400, 500, 600) angeordnet ist, um eine Anzahl von Schmutzpartikeln nachzuahmen.

7. System nach einem der Ansprüche 3 bis 6, wobei die Steuereinheit (120) für Folgendes konfiguriert ist:
wiederholtes Aktualisieren des Bestimmens des Parameters, der die Schmutzmenge auf der transparenten Abdeckfläche (117) angibt, und wiederholtes Erzeugen von Aktualisierungen des wenigstens einen grafischen Elements (400, 500, 600, 700) basierend auf dem aktualisierten Bestimmen des Parameters, der die Schmutzmenge auf der transparenten Abdeckfläche (117) angibt; und falls bestimmt wird, dass die Schmutzmenge auf der transparenten Abdeckfläche (117) unter dem ersten Schwellenwert liegt, spiegeln die Grafikdaten (D_{gr}) (300) wider, dass die transparente Abdeckfläche (117) sauber ist.

8. System nach einem der vorhergehenden Ansprüche, wobei, falls das System zwei oder mehr Abbildungseinheiten (110) umfasst, die Steuereinheit (120) konfiguriert ist, um die Grafikdaten (D_{gr}) derart zu erzeugen, dass das wenigstens eine Grafikelement (400) in der grafischen Benutzeroberfläche (135) auf eine Weise dargestellt wird, die die bestimmte Schmutzmenge einer spezifischen Abbildungseinheit (110) der Abbildungseinheiten (110), auf deren transparente Abdeckfläche (117) bestimmt wurde, zuordnet.

9. System nach einem der vorhergehenden Ansprüche, das ferner ein von dem Benutzer manipulierbares Eingabeelement (210) umfasst, das konfiguriert ist, um einen Benutzerbefehl (CMD) an die Steuereinheit (120) weiterzuleiten, wobei der Benutzerbefehl (CMD), wenn er durch die Steuereinheit (120) empfangen wird, konfiguriert ist, um zu bewirken, dass die Steuereinheit (120) vorübergehend verhindert, dass das wenigstens eine grafische Element (400, 500, 600) über die grafische Benutzeroberfläche (135) dargestellt wird.

10. Verfahren zum Steuern einer automatischen Melkanlage, wobei das Verfahren Folgendes umfasst:
Ermöglichen, dass ein Benutzer (U) über wenigstens eine Anzeigeansicht (DV1, DV2, DV3) in einer grafischen Benutzeroberfläche (135) mit der automatischen Melkanlage interagiert;
Aufzeichnen von Abbildungsdaten (D_{img}) mittels einer Abbildungseinheit (110), wobei die aufgezeichneten Abbildungsdaten (D_{img}) Daten umfassen, die wenigstens einen Abschnitt eines milchgebenden Tiers (A) darstellen, und wobei die Abbildungseinheit (110) eine transparente Abdeckfläche (117) aufweist, die konfiguriert ist, um einen Optikbereich (115) der Abbildungseinheit (110) zu schützen und durch deren transparente Abdeckfläche (117) die Abbildungsdaten (D_{img}) aufgezeichnet werden; und
Herstellen wenigstens eines Steuersignals (S-Ctrl) basierend auf den aufgezeichneten Abbildungsdaten (D_{img}), wobei das wenigstens eine Steuersignal (S-Ctrl) angeordnet ist, um wenigstens eine Funktion der automatischen Melkanlage zu steuern, **gekennzeichnet durch:**
Verarbeiten der aufgezeichneten Abbildungsdaten (D_{img}), um einen Parameter zu bestimmen, der eine Schmutzmenge auf der transparenten Abdeckfläche (117) angibt, Erzeugen von Grafikdaten (D_{gr}) für die Präsentation für den Benutzer (U) über die grafische Benutzeroberfläche (135), wobei die Grafikdaten (D_{gr}) wenigstens ein grafisches Element (400, 500, 600, 700) enthalten, das die Schmutzmenge auf der transparenten Abdeckfläche (117) widerspiegelt, und
Erzeugen der Grafikdaten (D_{gr}), derart, dass das wenigstens eine grafische Element auf wenigstens einer ersten Anzeigeansicht (DV1) der wenigstens einen Anzeigeansicht (DV1, DV2, DV3) überlagert ist und Informationen in der wenigstens einen ersten Anzeigeansicht (DV1) dadurch wenigstens teilweise blockiert werden, um durch den Benutzer (U) visuell überprüft zu werden.

11. Verfahren nach Anspruch 10, wobei das wenigstens eine grafische Element konfiguriert ist, um die Schmutzmenge auf der transparenten Abdeckfläche (117) derart proportional auszudrücken, dass eine relativ kleine Schmutzmenge als ein oder mehrere grafische Elemente (500, 710) mit vergleichsweise kleiner Größe, Anzahl und/oder hoher Transparenz ausgedrückt wird, und eine relativ große Schmutzmenge als ein oder mehrere grafische Elemente (400, 600, 720) mit vergleichsweise großer Größe, Anzahl und/oder geringer Transparenz ausgedrückt wird.

12. Verfahren nach einem der Ansprüche 10 oder 11, wobei, falls bestimmt wird, dass die Schmutzmenge auf der transparenten Abdeckfläche (117) unter einem ersten Schwellenwert liegt, das Verfahren das Erzeugen von Grafikdaten (D_{gr}) umfasst, um widerzuspiegeln (300), dass die transparente Abdeckfläche (117) sauber ist.

13. Verfahren nach einem der Ansprüche 10 bis 12, wobei, falls bestimmt wird, dass die Schmutzmenge auf der transparenten Abdeckfläche (117) über einem zweiten Schwellenwert liegt, das Verfahren das Erzeugen der Grafikdaten (D_{gr}) umfasst, um widerzuspiegeln (600), dass die transparente Abdeckfläche (117) durch Darstellen des einen grafischen Elements auf eine zyklisch Weise, die zwischen der ersten und der zweiten Phase abwechselt, stark mit Schmutz derart gehindert ist, dass in der ersten Phase das wenigstens eine grafische Element (600) einen relativ großen Informationsanteil in wenigstens einer der wenigstens einen Anzeigeansichten (DV1) blockiert, und in der zweiten Phase das wenigstens eine grafische Element (400) einen relativ kleinen Informationsanteil in der wenigstens einen Anzeigeansicht (DV1) blockiert.

14. Verfahren nach einem der Ansprüche 10 bis 13, wobei das wenigstens eine grafische Element (400, 500, 600) angeordnet ist, um eine Anzahl von Schmutzpartikeln nachzuahmen.

15. Verfahren nach einem der Ansprüche 12 bis 14, das Folgendes umfasst:
wiederholtes Aktualisieren des Bestimmens des Parameters, der die Schmutzmenge auf der transparenten Abdeckfläche (117) angibt, und Erzeugen wiederholter Aktualisierungen des wenigstens einen grafischen Elements (400, 500, 600, 700) basierend auf dem aktualisierten Bestimmen des Parameters, der die Schmutzmenge auf der transparenten Abdeckfläche (117) angibt; und
falls bestimmt wird, dass die Schmutzmenge auf der transparenten Abdeckfläche (117) unter dem ersten Schwellenwert liegt, spiegeln die Grafikdaten (D_{gr}) (300) wider, dass die transparente Abdeckfläche (117) sauber ist.

16. Verfahren nach einem der Ansprüche 10 bis 15, wobei, falls das System zwei oder mehr Abbildungseinheiten (110) umfasst, das Verfahren das Erzeugen der Grafikdaten (D_{gr}) derart umfasst, dass das wenigstens eine grafische Element (400) in der grafischen Benutzeroberfläche (135) auf eine Weise dargestellt wird, die die bestimmte Schmutzmenge einer spezifischen Abbildungseinheit (110) der Abbildungseinheiten (110), auf deren transparenter Abdeckfläche (117) bestimmt wurde, zuordnet.

17. Verfahren nach einem der Ansprüche 10 bis 16, das ferner Folgendes umfasst:
Überprüfen, ob ein Benutzerbefehl (CMD) über ein von dem Benutzer manipulierbares Eingabeelement (210) empfangen wurde, und falls dies der Fall ist, vorübergehendes Verhindern, dass das wenigstens eine grafische Element (400, 500, 600) über die grafische Benutzeroberfläche (135) dargestellt wird.

## Revendications

1. Système de commande d'une installation de traite automatique, comprenant :
une interface utilisateur graphique (135) configurée pour permettre à un utilisateur (U) d'interagir avec l'installation de traite automatique par le biais de l'au moins une vue d'affichage (DV1, DV2, DV3) ;
une unité d'imagerie (110) configurée pour enregistrer des données d'image (D_{img}) comprenant des données représentant au moins une partie d'un animal laitier (A), l'unité d'imagerie (110) ayant une surface de couverture transparente (117) configurée pour protéger une section optique (115) de l'unité d'imagerie (110) et les données d'image (D_{img}) étant enregistrées par la surface de couverture transparente (117) ; et
une unité de commande (120) configurée pour recevoir les données d'image enregistrées (D_{img}), et sur la base de celles-ci, produire au moins un signal de commande (S-Ctrl) agencé pour commander au moins une fonction de l'installation de traite automatique, **caractérisé en ce que** l'unité de commande (120) est en outre configurée pour :
traiter les données d'image enregistrées (D_{img}) pour déterminer un paramètre indiquant une quantité de saleté sur la surface de couverture transparente (117), et
générer des données graphiques (D_{gr}) destinées à une présentation à l'utilisateur (U) par le biais de l'interface utilisateur graphique (135), lesquelles données graphiques (D_{gr}) contiennent au moins un élément graphique (400, 500, 600, 700) reflétant la quantité de saleté sur la surface de couverture transparente (117),
l'unité de commande (120) étant configurée pour générer les données graphiques (Dgr) de telle sorte que l'au moins un élément graphique est superposé sur au moins une première vue d'affichage (DV1) de l'au moins une vue d'affichage (DV1, DV2, DV3) et des informations dans l'au moins une première vue d'affichage (DV1) sont ainsi au moins partiellement empêchées d'être inspectées visuellement par l'utilisateur (U).

2. Système selon la revendication 1, dans lequel l'au moins un élément graphique est configuré pour exprimer la quantité de saleté sur la surface de couverture transparente (117) de manière proportionnelle, de telle sorte qu'une quantité relativement faible de saleté est exprimée sous la forme d'un ou de plusieurs élément(s) graphique(s) (500, 710) de taille et de nombre relativement petits et/ou de transparence relativement élevée, et une quantité relativement élevée de saleté est exprimée sous la forme d'un ou de plusieurs élément(s) graphique(s) (400, 600, 720) de taille et de nombre relativement grands et/ou de transparence relativement faible.

3. Système selon l'une quelconque des revendications 1 ou 2, dans lequel si l'unité de commande (120) détermine que la quantité de saleté sur la surface de couverture transparente (117) est inférieure à un premier niveau de seuil, les données graphiques (D_{gr}) reflètent (300) que la surface de couverture transparente (117) est propre.

4. Système selon l'une quelconque des revendications précédentes, dans lequel si l'unité de commande (120) détermine que la quantité de saleté sur la surface de couverture transparente (117) est supérieure à un second niveau de seuil, les données graphiques (D_{gr}) reflètent que la surface de couverture transparente (117) est fortement obstruée par de la saleté par l'unité de commande (120) étant configurée pour amener l'au moins un élément graphique à être présenté de manière cyclique en alternant entre la première et la seconde phases, de telle sorte que dans la première phase, au moins un élément graphique (600) bloque une proportion relativement importante d'informations dans au moins une de l'au moins une vue d'affichage (DV1), et dans la seconde phase, l'au moins un élément graphique (400) bloque une proportion relativement faible des informations dans ladite au moins une vue d'affichage (DV1).

5. Système selon la revendication 4, dans lequel l'unité de commande (120) est configurée pour générer les données graphiques (D_{gr}) de telle sorte que l'au moins un élément graphique effectue progressivement une transition entre les première et seconde phases.

6. Système selon l'une quelconque des revendications précédentes, dans lequel l'au moins un élément graphique (400, 500, 600) est agencé pour reproduire un certain nombre de particules de saleté.

7. Système selon l'une quelconque des revendications 3 à 6, dans lequel l'unité de commande (120) est configurée pour :
mettre à jour à plusieurs reprises la détermination du paramètre indiquant la quantité de saleté sur la surface de couverture transparente (117), et générer à plusieurs reprises des mises à jour de l'au moins un élément graphique (400, 500, 600, 700) sur la base de la détermination mise à jour du paramètre indiquant la quantité de saleté sur la surface de couverture transparente (117) ; et
si la quantité de saleté sur la surface de couverture transparente (117) est déterminée comme étant inférieure au premier niveau de seuil, les données graphiques (D_{gr}) reflètent (300) que la surface de couverture transparente (117) est propre.

8. Système selon l'une quelconque des revendications précédentes, dans lequel, si le système comprend deux ou plusieurs unités d'imagerie (110), l'unité de commande (120) est configurée pour générer les données graphiques (D_{gr}) de telle sorte que l'au moins un élément graphique (400) est présenté dans l'interface utilisateur graphique (135) d'une manière associant la quantité déterminée de saleté à une unité d'imagerie spécifique (110) desdites unités d'imagerie (110) sur laquelle la surface de couverture transparente (117) a été déterminée.

9. Système selon l'une quelconque des revendications précédentes, comprenant en outre un élément d'entrée manipulable par l'utilisateur (210) configuré pour transmettre une commande utilisateur (CMD) à l'unité de commande (120), laquelle commande utilisateur (CMD) lorsqu'elle est reçue par l'unité de commande (120), est configurée pour amener l'unité de commande (120) à empêcher temporairement l'au moins un élément graphique (400, 500, 600) d'être présenté par le biais de l'interface utilisateur graphique (135).

10. Procédé de commande d'une installation de traite automatique, le procédé comprenant :
l'autorisation, par le biais d'au moins une vue d'affichage (DV1, DV2, DV3) dans une interface utilisateur graphique (135), à un utilisateur (U) d'interagir avec l'installation de traite automatique ;
l'enregistrement des données d'image (D_{img}), au moyen d'une unité d'imagerie (110), les données d'image enregistrées (D_{img}) comprenant des données représentant au moins une partie d'un animal laitier (A), et l'unité d'imagerie (110) ayant une surface de couverture transparente (117) configurée pour protéger une section optique (115) de l'unité d'imagerie (110) et les données d'image (D_{img}) sont enregistrées par la surface de couverture transparente (117) ; et
la production d'au moins un signal de commande (S-Ctrl) sur la base des données d'image enregistrées (D_{img}), l'au moins un signal de commande (S-Ctrl) étant agencé pour commander au moins une fonction de l'installation de traite automatique, **caractérisé par** :
le traitement des données d'image enregistrées (D_{img}) pour déterminer un paramètre indiquant une quantité de saleté sur la surface de couverture transparente (117), la génération des données graphiques (D_{gr}) destinées à une présentation à l'utilisateur (U) par le biais de l'interface utilisateur graphique (135), lesquelles données graphiques (D_{gr}) contiennent au moins un élément graphique (400, 500, 600, 700) reflétant la quantité de saleté sur la surface de couverture transparente (117), et la génération des données graphiques (D_{gr}) de telle sorte que l'au moins un élément graphique est superposé sur au moins une première vue d'affichage (DV1) de l'au moins une vue d'affichage (DV1, DV2, DV3) et des informations dans l'au moins une première vue d'affichage (DV1) sont ainsi au moins partiellement empêchées d'être inspectées visuellement par l'utilisateur (U).

11. Procédé selon la revendication 10, dans lequel l'au moins un élément graphique est configuré pour exprimer la quantité de saleté sur la surface de couverture transparente (117) de manière proportionnelle, de telle sorte qu'une quantité relativement faible de saleté est exprimée sous la forme d'un ou de plusieurs élément(s) graphique(s) (500, 710) de taille et de nombre relativement petits et/ou de transparence relativement élevée et une quantité relativement élevée de saleté est exprimée sous la forme d'un ou de plusieurs élément(s) graphique(s) (400, 600, 720) de taille et de nombre relativement grands et/ou de transparence relativement faible.

12. Procédé selon l'une quelconque des revendications 10 ou 11, dans lequel s'il est déterminé que la quantité de saleté sur la surface de couverture transparente (117) est inférieure à un premier niveau de seuil, le procédé comprend la génération des données graphiques (D_{gr}) pour refléter (300) que la surface de couverture transparente (117) est propre.

13. Procédé selon l'une quelconque des revendications 10 à 12, dans lequel s'il est déterminé que la quantité de saleté sur la surface de couverture transparente (117) est supérieure à un second niveau de seuil, le procédé comprend la génération des données graphiques (D_{gr}) pour refléter (600) que la surface de couverture transparente (117) est fortement obstruée par de la saleté par la présentation de l'au moins un élément graphique de manière cyclique alternant entre la première et la seconde phases, de telle sorte que dans la première phase l'au moins un élément graphique (600) bloque une proportion relativement importante d'informations dans au moins une de l'au moins une vue d'affichage (DV1), et dans la seconde phase, l'au moins un élément graphique (400) bloque une proportion relativement faible des informations dans ledit au moins une vue d'affichage (DV1).

14. Procédé selon l'une quelconque des revendications 10 à 13, dans lequel l'au moins un élément graphique (400, 500, 600) est agencé pour reproduire un certain nombre de particules de saleté.

15. Procédé selon l'une quelconque des revendications 12 à 14, comprenant :
la mise à jour, de manière répétée, de la détermination du paramètre indiquant la quantité de saleté sur la surface de couverture transparente (117), et la génération des mises à jour répétées de l'au moins un élément graphique (400, 500, 600, 700) sur la base de la détermination mise à jour du paramètre indiquant la quantité de saleté sur la surface de couverture transparente (117) ; et
si la quantité de saleté sur la surface de couverture transparente (117) est déterminée comme étant inférieure au premier niveau de seuil, les données graphiques (D_{gr}) reflètent (300) que la surface de couverture transparente (117) est propre.

16. Procédé selon l'une quelconque des revendications 10 à 15, dans lequel, si le système comprend deux ou plusieurs unités d'imagerie (110), le procédé comprend la génération des données graphiques (D_{gr}) de telle sorte que l'au moins un élément graphique (400) est présenté dans l'interface utilisateur graphique (135) d'une manière associant la quantité déterminée de saleté à une unité d'imagerie spécifique (110) desdites unités d'imagerie (110) sur laquelle la surface de couverture transparente (117) a été déterminée.

17. Procédé selon l'une quelconque des revendications 10 à 16, comprenant en outre :
la vérification de la réception d'une commande utilisateur (CMD) par le biais d'un élément d'entrée manipulable par l'utilisateur (210) et, le cas échéant, le blocage temporaire de la présentation de l'au moins un élément graphique (400, 500, 600) par le biais de l'interface utilisateur graphique (135).
